# EUROPEAN PATENT SPECIFICATION

(11) **EP 3 885 616 B1**
(45) Date of publication and mention of the grant of the patent: **31.01.2024**
(21) Application number: 20175644.2
(22) Date of filing: 20.05.2020
(51) Int. Cl.: F16K 11/074, F16K 3/08, F16K 35/04, E03C 1/02, E03C 1/048

(54) **WATER DISTRIBUTOR**
WASSERVERTEILER
DISTRIBUTEUR D'EAU

(30) Priority: 26.03.2020 CN 202020410290 U
(43) Date of publication of application: 29.09.2021
(73) Proprietor: Fujian Xihe Sanitary Ware Technology Co., Ltd., QuanZhou, Fujian 362304 (CN)
(72) Inventor: LIN, Xiaofa, QuanZhou, Fujian (CN); LIN, Xiaoshan, QuanZhou, Fujian (CN); JI, Hejun, QuanZhou, Fujian (CN)
(74) Representative: Murgitroyd & Company

(56) References cited:
- EP-A1- 3 556 949
- WO-A1-2017/092195
- US-A1- 2016 109 030

## Description

### Technical Field

The application relates to the technical field of sanitary ware, in particular to a water distributor.

### Background

Modern homes have increasing requirements for the sanitary facilities. Besides the water inlet faucet, there is also a shower head for shower on the bathtub. In order to simplify the layout of the pipeline, a water distributor is needed. The water distributor is an important component of the bathtub and the bath faucet. The water distributor can open and close the water inlet pipes for two flow channels which are located at the water outlet end of the faucet and need water distribution, so as to realize the water distributing function.

In the related arts, the structure of the water distributor is complex, which is not conducive to disassembly and assembly, and the water flow is small, affecting customer experience.

The features of the preamble of the independent claims are known from EP3556949A1. Related technologies are also known from WO2017/092195A1 and US2016/109030A1.

### Summary

The embodiments of the application provide a water distributor as defined in the independent claim, which is used for solving the problem that the complicated structure of the water distributor is not conducive to disassembly and assembly.

A water distributor is provided, which includes: a water distributor body including a base and a side wall which enclose to form a receiving chamber, a water inlet pipe and at least two water outlet pipes being arranged on the side wall; a water distributing valve; a rotatable shaft being sleeved outside the water distributing valve; and a gland. The water distributing valve and the rotatable shaft are constrained in the receiving chamber by means of the gland. A sealing chamber is formed among the rotatable shaft, the water distributing valve and the water distributor body and is divided into a plurality of annular cavities by the water distributing valve. The cavity communicated with the water inlet pipe is configured as a water inlet cavity, and the cavities communicated with the water outlet pipes are configured as water outlet cavities. The rotatable shaft is configured such that a water outlet cavity can be selected to communicate with the water inlet cavity when the rotatable shaft is rotated.

The sealing chamber is divided into a plurality of annular cavities by means of the water distributing valve, and the plurality of cavities form water passages, so that the water distributor has a simple structure. After the gland is removed, the rotatable shaft and the water distributing valve can be taken out at the same time, and the inner side of the side wall of the water distributor body is free of a hydraulic component such as a sealing ring, which is convenient for disassembly, assembly and maintenance.

Other features and advantages of the application will be set forth in the following description, and will become apparent in part from the description, or be understood through the implementation of the application. The purpose and other advantages of the application can be realized and obtained through the structures specially described in the specification and the drawings.

### Brief Description of Drawings

The drawings, which constitute a part of the specification, are used to provide a further understanding of the technical schemes of the application, together with the embodiments of the application are used to explain the technical schemes of the application, and do not constitute a limitation on the technical schemes of the application.
FIG. 1 is a perspective view of a water distributor according to an embodiment of the application;
FIG. 2 is an exploded view of the water distributor according to an embodiment of the application;
FIG. 3 is a sectional view of the water distributor according to an embodiment of the application;
FIG. 4 is a sectional view at the position A-A in FIG. 3; and
FIG. 5 is a sectional view at the position B-B in FIG. 4.

### Description of reference signs:

1- water distributor; 10- water distributor body; 11- base; 111- second restricting formation; 112- third through hole; 12- side wall; 13- water inlet pipe; 14- water outlet pipe; 14a- first water outlet pipe; 14b- second water outlet pipe; 20- water distributing valve; 21-valve shaft; 22- barrier sheet; 22a- first barrier sheet; 22b- second barrier sheet; 221-positioning portion; 23- cavity; 23a- first cavity; 23b- second cavity; 23c- third cavity; 24a- first water passing hole; 24b- second water passing hole; 25- bridge; 26- first sealing ring; 27-second sealing ring; 28- valve base; 281- first restricting formation; 282- fourth sealing ring; 29- first through hole; 30- rotatable shaft; 31- rotatable shaft body; 311- fixing groove; 312-mounting groove; 321- sealing member; 322- first elastic member; 33- third sealing ring; 34-ball latch mechanism; 341- ball latch; 342- second elastic member; 35- second through hole; 40- gland; 50- handle; 60- fixing member.

### Detailed Description

In order to make the purposes, technical schemes and advantages of the application clearer, the embodiments of the application will be described in detail below with reference to the drawings. It should be noted that the embodiments in this application and the features in the embodiments can be combined with each other arbitrarily if there is no conflict.

The water distributor realizes the water distributing function through the cooperation of a water distributing valve, a rotatable shaft and other related components. In the related art, in order to realize the water distributing function and prevent water leakage or poor sealing in the water distributor, the internal structure of the water distributor is very complex, which is not conducive to disassembly, assembly and maintenance.

An embodiment of this application provides a water distributor, which includes: a water distributor body including a base and a side wall which enclose to form a receiving chamber, a water inlet pipe and at least two water outlet pipes being arranged on the side wall; a water distributing valve; a rotatable shaft being sleeved outside the water distributing valve; and a gland. The water distributing valve and the rotatable shaft are constrained in the receiving chamber by means of the gland. A sealing chamber is formed among the rotatable shaft, the water distributing valve and the water distributor body and is divided into a plurality of annular cavities by the water distributing valve. The cavity communicated with the water inlet pipe is configured as a water inlet cavity, and the cavities communicated with the water outlet pipes are configured as water outlet cavities. The rotatable shaft is configured such that a water outlet cavity can be selected to communicate with the water inlet cavity when the rotatable shaft is rotated.

The technical scheme of the water distributor according to an embodiment of the application will be described in detail below with reference to the drawings.

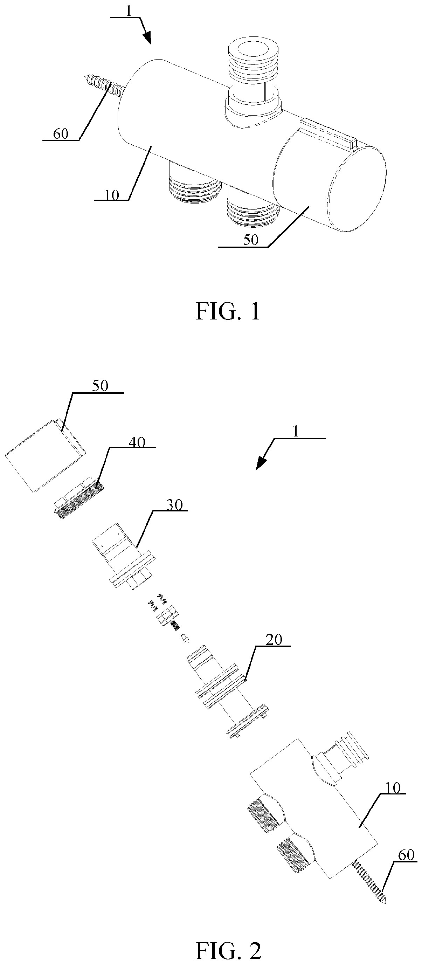

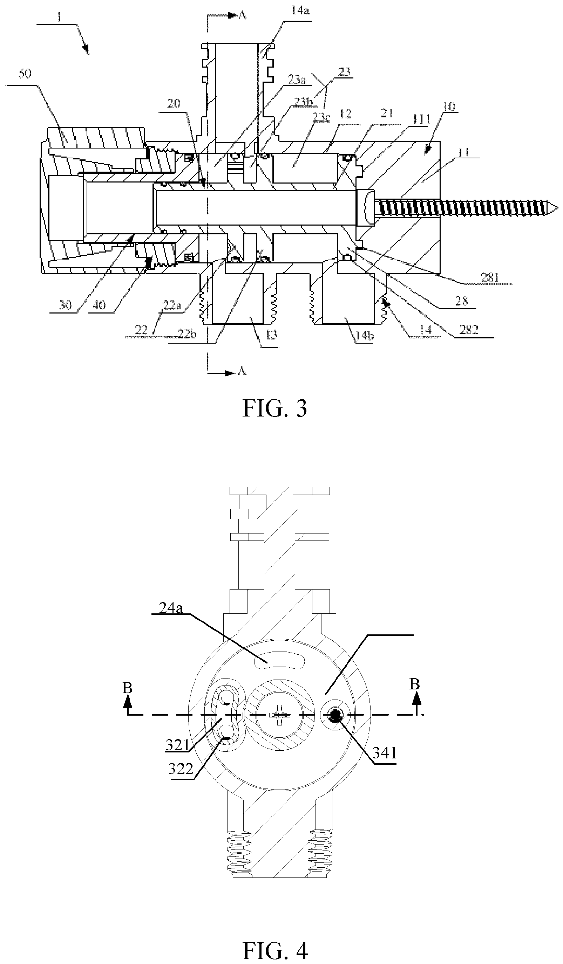

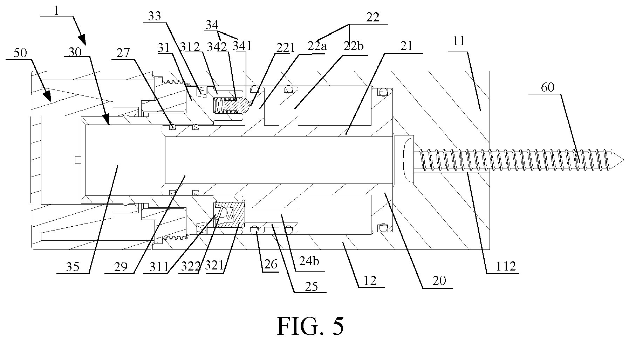

FIG. 1 is a perspective view of a water distributor according to an embodiment of the application. FIG. 2 is an exploded view of the water distributor according to an embodiment of the application. FIG. 3 is a sectional view of the water distributor according to an embodiment of the application. FIG. 4 is a sectional view at the position A-A in FIG. 3. FIG. 5 is a sectional view at the position B-B in FIG. 4.

As shown in FIGs. 1 to 5, the water distributor 1 includes a water distributor body 10, a water distributing valve 20, a rotatable shaft 30, a gland 40 and a handle 50. The water distributor body 10 encloses a receiving chamber and includes a water inlet pipe 13 and at least two water outlet pipes 14. The water inlet pipe 13 and the water outlet pipes 14 are both communicated with the receiving chamber. The rotatable shaft 30 is sleeved outside the water distributing valve 20. The water distributing valve 20 and the rotatable shaft 30 are constrained in the receiving chamber by means of the gland 40. A sealing chamber is formed among the rotatable shaft 30, the water distributing valve 20 and the water distributor body 10. The water distributing valve 20 divides the sealing chamber into a plurality of annular cavities 23. The cavitiy communicated with the water inlet pipe 13 is configured as a water inlet cavity, and the cavities communicated with the water outlet pipes 14 are configured as water outlet cavities. The rotatable shaft 30 is configured such that a water outlet cavity can be selected to communicate with the water inlet cavity when the rotatable shaft 30 is rotated.

As shown in FIG. 3, the water distributor body 10 includes a base 11 and a side wall 12 which enclose to form the receiving chamber. The side wall 12 has a cylindrical shape, and the receiving chamber is arranged along the axial direction of the side wall 12. The water inlet pipe 13 and a plurality of water outlet pipes 14 are provided on the side wall 12, and both the water inlet pipe 13 and the water outlet pipes 14 are communicated with the receiving chamber. In an example, there are one water inlet pipe 13 and two water outlet pipes 14. The two water outlet pipes 14 may be a first water outlet pipe 14a and a second water outlet pipe 14b. The first water outlet pipe 14a and the water inlet pipe 13 are located on opposite sides of the side wall 12. The axes of the first water outlet pipe 14a and the water inlet pipe 13 are collinear and perpendicular to the axis of the side wall 12. The communicating ports of the water inlet pipe 13 and the first water outlet pipe 14a for communicating with the receiving chamber are staggered with each other. The communicating port of the receiving chamber communicated with the water inlet pipe 13 is further away from the base 11 of the water distributor body 10 than the communicating port of the receiving chamber communicated with the first water outlet pipe 14a. The second water outlet pipe 14b is arranged on the same side as the water inlet pipe 13 and is arranged along the axial direction of the side wall 12. The second water outlet pipe 14b is closer to the base 11 of the water distributor body 10 than the water inlet pipe 13. In this embodiment, the base 11 and the side wall 12 can be integrally molded, or the base 11 can be welded or screwed to the side wall 12.

As shown in FIG. 3, the water distributing valve 20 is arranged in the receiving chamber and is abutted against the base 11 of the water distributor body 10. The rotatable shaft 30 is sleeved on the end of the water distributing valve 20 which is away from the base 11 of the water distributor body 10. The gland 40 is sleeved outside the rotatable shaft 30 and is fixed to the water distributor body 10 by means of threaded connection, for example. The gland 40, the rotatable shaft 30 and the water distributing valve 20 are coaxially arranged with the side wall 12 of the water distributor body 10, and a sealing chamber is formed among the rotatable shaft 30, the water distributing valve 20 and the water distributor body 10.

As shown in FIG. 3, the water distributing valve 20 includes a valve shaft 21 and a plurality of barrier sheets 22 arranged in the circumferential direction of the valve shaft 21. The barrier sheets 22 are hermetically connected with the side wall 12 of the water distributor body 10 and divide the sealing chamber into a plurality of annular cavities 23. The cavity 23 communicated with the water inlet pipe 13 is configured as the water inlet cavity, and the cavities 23 communicated with the water outlet pipes 14 are configured as the water outlet cavities. The plurality of water outlet cavities are communicated with the water inlet cavity through water passing holes arranged on the barrier sheets, respectively. In an example, there are two barrier sheets 22, namely a first barrier sheet 22a and a second barrier sheet 22b, which divide the sealing chamber into three annular cavities 23. A first cavity 23a is formed between the first barrier sheet 22a and the rotatable shaft 30, a second cavity 23b is formed between the first barrier sheet 22a and the second barrier sheet 22b, and a third cavity 23c is formed between the second barrier sheet 22b and the base 11 of the water distributor body 10. The water inlet pipe 13 is communicated with the first cavity 23a to form the water inlet cavity, and the second cavity 23b and the third cavity 23c are each communicated with one water outlet pipe 14. Optionally, the first water outlet pipe 14a is in communication with the second cavity 23b, the second water outlet pipe 14b is in communication with the third cavity 23c, and the second cavity 23b and the third cavity 23c form water outlet cavities, that is, the plurality of cavities form water passages. As shown in FIG. 4 and FIG. 5, the first barrier sheet 22a is provided with a first water passing hole 24a and a second water passing hole 24b, the first cavity 23a and the second cavity 23b are communicated through the first water passing hole 24a, and the first cavity 23a and the third cavity 23c are communicated through the second water passing hole 24b. Optionally, as shown in FIG. 5, a bridge 25 is provided between the first barrier sheet 22a and the second barrier sheet 22b, and the second water passing hole 24b runs through the bridge 25 and the second barrier sheet 22b. Optionally, a first sealing ring 26 is provided on the edge of the barrier sheet 22, and the barrier sheet 22 is hermetically connected with the side wall 12 of the water distributor body by means of the first sealing ring 26. A second sealing ring 27 for sealing the gap between the rotatable shaft 30 and the side wall of the valve shaft 21 is provided at the position where the valve shaft 21 and the rotatable shaft are sleeved to each other.

As shown in FIG. 5, the rotatable shaft 30 includes a rotatable shaft body 31 sleeved outside the valve shaft 21 of the water distributing valve and a sealing member 321 arranged on the side of the rotatable shaft body 31 facing the base 11 of the water distributor body. The sealing surface of the sealing member 321 is larger in size than any of the water passing holes 24a, 24b. When the rotatable shaft body 31 is rotated, the sealing member 321 can be moved among a plurality of water passing hole positions to realize the water distribution function. In an example, a fixing groove 311 is provided on the side of the rotatable shaft body 31 facing the base 11 of the water distributor body, and the sealing member 321 is provided in the fixing groove 311. A first elastic member 322 is arranged between the sealing member 321 and the groove bottom of the fixing groove 311, and the first elastic member 322 can compensate the abrasion of the sealing member 321 to ensure a stable water distribution function. The first elastic member 322 can also keep the water distributing valve abutting against the base 11 of the water distributor body. A third sealing ring 33 is arranged in the circumferential direction of the rotatable shaft body 31. The third sealing ring 33 seals the gap between the rotatable shaft body 31 and the side wall 12 of the water distributor body. The third sealing ring 33 may be a Y-shaped sealing ring. Optionally, the first elastic member 322 is a spring, the sealing member 321 is a sealing rubber cup, and a fixing column for fixing the spring is provided at the groove bottom of the fixing groove 311. The handle 50 is arranged at the end of the rotatable shaft body 31 remote from the base 11 of the water distributor body, and is fixedly connected with the rotatable shaft body 31 by means of threaded connection, plug-in connection or a pin, for example. It should be noted that the sealing member can seal one water passing hole, or can seal two water passing holes, or can keep all the water passing holes open, that is, several water outlet pipes can be opened at the same time.

In the embodiment of the application, the sealing chamber is divided into a plurality of annular cavities by the water distributing valve, and the plurality of cavities form water passages, therefore the water distributor has a simple structure. After the gland is removed, the rotatable shaft and the water distributing valve can be taken out at the same time, and the inner side of the side wall of the water distributor body is free of a hydraulic component, such as a sealing ring, which is convenient for disassembly, assembly and maintenance. In addition, the volumes of the cavities are relatively large, allowing more water to flow through, thus ensuring the water pressure of the shower head and the handshower and the like and improving the customer experience.

In an exemplary embodiment, as shown in FIG. 5, the water distributor 1 further includes a ball latch mechanism 34 disposed on the side of the rotatable shaft body 31 facing the base 11 of the water distributor body. The rotatable shaft body 31 is provided with a mounting groove 312. The ball latch mechanism 34 includes a ball latch 341 and a second elastic member 342. The ball latch 341 is accommodated in the mounting groove 312, the second elastic member 342 is abutted between the ball latch 341 and the mounting groove 312, and a positioning portion 221 matched with the ball latch 341 is provided on the barrier sheet 22 of the water distributing valve near the ball latch 341. Optionally, the second elastic member 342 is a spring, and the positioning portion 221 is a chute. The ball latch mechanism 34 can improve the hand feeling and make a clear positioning sound during the switching operation of the water distributor, which are similar to the hand feeling and sound of the ceramic water distributing valve core common in the market, and thus can meet the market requirements and improve the customer experience.

In an exemplary embodiment, as shown in FIG. 3, the water distributing valve 20 further includes a valve base 28 connected to an end of the valve shaft 21. A first restricting formation 281 is provided at the side of the valve base 28 facing the base 11 of the water distributor body 10, and a second restricting formation 111 is provided at the base 11 of the water distributor body 10. The first restricting formation 281 and the second restricting formation 111 are configured to cooperatively constrain the rotation of the water distributing valve 20. The first restricting formation 281 may be configured as at least two protrusions, and the second restricting formation may be configured as grooves matched with the protrusions. A fourth sealing ring 282 is provided circumferentially at the edge of the valve base 28, and seals the gap between the valve base 28 and the side wall 12.

In an exemplary embodiment, as shown in FIG. 5, the water distributing valve 20 includes a first through hole 29 that runs through the valve shaft 21 in the axial direction, the rotatable shaft 30 includes a second through hole 35 that runs through the rotatable shaft body 31 in the axial direction, and the water distributor body includes a third through hole 112 that runs through the water distributor body in the axial direction. The first through hole 29, the second through hole 35, and the third through hole 112 are provided for a fixing member 60 to pass through, so as to fix the water distributor on a wall. The fixing member 60 may be a self-tapping screw. When installing the water distributor, a screwdriver directly passes through the water distributor body to lock the self-tapping screw, and the handle is fitted, thereby realizing a quick installation of the water distributor.

The following further explains the technical scheme of the application by describing the working principle of the water distributor in the embodiment of the application.

As shown in FIGs. 3 and 5, the handle is first opened, and the fixing member 60 is inserted into and extends out of the water distributor body 10 through the first through hole 29, the second through hole 35 and the third through hole 112. A screwdriver is inserted through the first through hole 29, the second through hole 35 and the third through hole 112, so as to make the fixing member 60 threadedly connected with the wall, thereby fixing the water distributor 1 to the wall. The handle is then fitted. A convenient installation is achieved. The water inlet pipe 13 is externally connected with a water inlet pipeline, the first water outlet pipe 14a is connected with the shower head, and the second water outlet pipe 14b is connected with the handshower. Water enters the first cavity 23a from the water inlet pipe 13 and the rotatable shaft 30 is rotated, so that the sealing member 321 seals the first water passing hole 24a, thus the first cavity 23a and the third cavity 23c are communicated to supply water for the handshower. The rotatable shaft 30 is continuously rotated, so that the sealing member 321 seals the second water passing hole 24b, thus the first cavity 23a and the second cavity 23b are communicated to supply water for the shower head. When the sealing member 321 is located at a position other than the positions of the first water passing hole 24a and the second water passing hole 24b, the shower head and the handshower can discharge water at the same time. During the rotation of the rotatable shaft 30, the ball latch mechanism 34 will make a clear positioning sound to enhance the customer experience.

With the water distributor provided by the embodiment of the application, in use, a valve can be arranged on the pipeline communicated with the water inlet pipe, so that the water distributor only plays a role of a water distributing function.

In the description of the application, it should be noted that the orientation or positional relationship indicated by the terms "upper", "lower", "one side", "the other side", "one end", "the other end", "edge", "opposite", "four corners", "periphery" and "'□' shaped structure" and the like are determined based on the orientation or positional relationship shown in the drawings, only for convenience of describing the application and simplifying the description, and do not indicate or imply that the stated structure has a specific orientation or is constructed and operates in a specific orientation, and therefore cannot be understood as a limitation on the application.

In the description of the embodiment of the application, unless otherwise clearly specified and defined, the terms "connection", "direct connection", "indirect connection", "fixed connection", "installation" and "assembly" shall be broadly understood. For example, they may be fixed connection, detachable connection or integrated connection. The terms "installation", "connection" and "fixed connection" can be a direct connection, or an indirect connection through an intermediate medium, or an internal communication between two elements. For those of ordinary skill in the art, the specific meaning of the above terms in the application can be understood according to the context.

The scope of the protection conferred by the present application is defined by the appended claims.

## Claims

1. A water distributor (1) comprising: :
a water distributor body (10) comprising a base (11) and a side wall (12) which enclose to form a receiving chamber, a water inlet pipe (13) and at least two water outlet pipes (14) being arranged on the side wall (12);
a water distributing valve (20);
a rotatable shaft (30) being sleeved outside the water distributing valve (20); and
a gland (40),
wherein the water distributing valve (20) and the rotatable shaft (30) are constrained in the receiving chamber by means of the gland (40),
wherein a sealing chamber is formed among the rotatable shaft (30), the water distributing valve (20) and the water distributor body (10) and is divided into a plurality of annular cavities (23) by the water distributing valve (20),
wherein the cavity communicated with the water inlet pipe (13) is configured as a water inlet cavity (23a), and the cavities communicated with the water outlet pipes (14) are configured as water outlet cavities (23b, 23c), and
wherein the rotatable shaft (30) is configured such that a water outlet cavity (23b, 23c) can be selected to communicate with the water inlet cavity (23a) when the rotatable shaft (30) is rotated;
the water distributing valve (20) comprises a valve shaft (21) and a plurality of barrier sheets (22) arranged in a circumferential direction of the valve shaft (21), and the plurality of barrier sheets (22) divide the sealing chamber into said plurality of annular cavities (23);
the plurality of water outlet cavities (23b, 23c) are each communicated with the water inlet cavity (23a) through water passing holes (24a, 24b) arranged on the barrier sheets (22).

2. The water distributor (1) according to claim 1, **characterized in that**, the plurality of barrier sheets (22) comprise a first barrier sheet (22a) and a second barrier sheet (22b), wherein a first cavity (23a) is formed between the first barrier sheet (22a) and the rotatable shaft (30), a second cavity (23b) is formed between the first barrier sheet (22a) and the second barrier sheet (22b), and a third cavity (23c) is formed between the second barrier sheet (22b) and the base (11) of the water distributor body (10), wherein the first cavity (23a) is communicated with the water inlet pipe (13), and the second cavity (23b) and the third cavity (23c) are each communicated with one of the water outlet pipes (14), and wherein the first barrier sheet (22a) is provided with a first water passing hole (24a) for communicating the first cavity (23a) with the second cavity (23b) and a second water passing hole (24b) for communicating the first cavity (23a) with the third cavity (23c).

3. The water distributor (1) according to claim 2, **characterized in that**, a bridge (25) is provided between the first barrier sheet (22a) and the second barrier sheet (22b), and the second water passing hole (24b) runs through the bridge (25) and the second barrier sheet (22b).

4. The water distributor (1) according to claim 1, **characterized in that**, the water distributing valve (20) further comprises a valve base (28) connected with an end of the valve shaft (21), wherein a first restricting formation (281) is provided at a side of the valve base (28) facing the base (11) of the water distributor body (10), wherein a second restricting formation (111) is arranged at the base (11) of the water distributor body (10), and wherein the first restricting formation (281) and the second restricting formation (111) are configured to cooperatively constrain the rotation of the water distributing valve (20).

5. The water distributor (1) according to any one of claims 1-4, **characterized in that**, the rotatable shaft (30) comprises a rotatable shaft body (31) sleeved outside the valve shaft (21) and a sealing member (321) provided at a side of the rotatable shaft body (31) facing the base (11) of the water distributor body (10), wherein the sealing member (321) is configured to be able to move among a plurality of water passing hole positions and seal a water passing hole (24a, 24b) when the rotatable shaft body (31) is rotated.

6. The water distributor (1) according to claim 5, **characterized in that**, a fixing groove (311) is provided at the side of the rotatable shaft body (31) facing the base (11) of the water distributor body (10), wherein the sealing member (321) is arranged in the fixing groove (311), and wherein a first elastic member (322) is provided between the sealing member (321) and the fixing groove (311).

7. The water distributor (1) according to claim 5, **characterized in that**, the water distributor (1) further comprises a ball latch mechanism (34) provided at the side of the rotatable shaft body (31) facing the base (11) of the water distributor body (10), wherein the rotatable shaft body (31) is provided with a mounting groove (312), wherein the ball latch mechanism (34) comprises a ball latch (341) and a second elastic member (342), wherein the ball latch (341) is accommodated in the mounting groove (312), the second elastic member (342) is abutted between the ball latch (341) and the mounting groove (312), and wherein a positioning portion (221) matched with the ball latch (341) is provided on the barrier sheet which is located on the side of the water distributing valve (20) close to the ball latch (341).

8. The water distributor (1) according to claim 5, **characterized in that**, the water distributing valve (20) comprises a first through hole (29) running through the valve shaft (21) in an axial direction, the rotatable shaft (30) comprises a second through hole (35) running through the rotatable shaft body (31) in the axial direction, and the water distributor body (10) comprises a third through hole (112) running through the water distributor body (10) in the axial direction, wherein the first through hole (29), the second through hole (35) and the third through hole (112) are configured for a fixing member (60) to pass therethrough so as to fix the water distributor (1) on a wall.

## Patentansprüche

1. Ein Wasserverteiler (1), der Folgendes beinhaltet:
einen Wasserverteilerkörper (10), der einen Boden (11) und eine Seitenwand (12) beinhaltet, die eine Aufnahmekammer bildend umschließen, wobei an der Seitenwand (12) ein Wassereinlassrohr (13) und mindestens zwei Wasserauslassrohre (14) angeordnet sind;
ein Wasserverteilungsventil (20);
eine drehbare Welle (30), die außerhalb des Wasserverteilungsventils (20) liegt; und
eine Stopfbuchse (40),
wobei das Wasserverteilungsventil (20) und die drehbare Welle (30) mittels der Stopfbuchse (40) in der Aufnahmekammer eingespannt sind,
wobei eine Dichtungskammer zwischen der drehbaren Welle (30), dem Wasserverteilungsventil (20) und dem Wasserverteilerkörper (10) gebildet ist und durch das Wasserverteilungsventil (20) in eine Vielzahl von ringförmigen Hohlräumen (23) unterteilt ist,
wobei der mit dem Wassereinlassrohr (13) in Kommunkation stehende Hohlraum als Wassereinlasshohlraum (23a) konfiguriert ist und die mit den Wasserauslassrohren (14) in Kommunikation stehenden Hohlräume als Wasserauslasshohlräume (23b, 23c) konfiguriert sind und
wobei die drehbare Welle (30) so konfiguriert ist, dass ein Wasserauslasshohlraum (23b, 23c) ausgewählt werden kann, um mit dem Wassereinlasshohlraum (23a) zu kommunizieren, wenn die drehbare Welle (30) gedreht wird;
das Wasserverteilungsventil (20) eine Ventilwelle (21) und eine Vielzahl von Sperrplatten (22) beinhaltet, die in einer Umfangsrichtung der Ventilwelle (21) angeordnet sind, und die Vielzahl von Sperrplatten (22) die Dichtungskammer in die Vielzahl von ringförmigen Hohlräumen (23) unterteilt;
die Vielzahl von Wasserauslasshohlräumen (23b, 23c) jeweils mit dem Wassereinlasshohlraum (23a) durch Wasserdurchgangslöcher (24a, 24b) in Kommunikation stehen, die auf den Sperrplatten (22) angeordnet sind.

2. Wasserverteiler (1) gemäß Anspruch 1, **dadurch gekennzeichnet, dass** die Vielzahl von Sperrplatten (22) eine erste Sperrplatte (22a) und eine zweite Sperrplatte (22b) beinhaltet, wobei ein erster Hohlraum (23a) zwischen der ersten Sperrplatte (22a) und der drehbaren Welle (30) gebildet ist, ein zweiter Hohlraum (23b) zwischen der ersten Sperrplatte (22a) und der zweiten Sperrplatte (22b) gebildet ist und ein dritter Hohlraum (23c) zwischen der zweiten Sperrplatte (22b) und dem Boden (11) des Wasserverteilerkörpers (10) gebildet ist, wobei der erste Hohlraum (23a) mit dem Wassereinlassrohr (13) in Kommunikation steht und der zweite Hohlraum (23b) und der dritte Hohlraum (23c) jeweils mit einem der Wasserauslassrohre (14) in Kommunikation stehen und wobei die erste Sperrplatte (22a) mit einem ersten Wasserdurchlaufloch (24a) zur Kommunikation des ersten Hohlraums (23a) mit dem zweiten Hohlraum (23b) und einem zweiten Wasserdurchlaufloch (24b) zur Kommunikation des ersten Hohlraums (23a) mit dem dritten Hohlraum (23c) bereitgestellt ist.

3. Wasserverteiler (1) gemäß Anspruch 2, **dadurch gekennzeichnet, dass** eine Brücke (25) zwischen der ersten Sperrplatte (22a) und der zweiten Sperrplatte (22b) bereitgestellt ist und dass das zweite Wasserdurchlaufloch (24b) durch die Brücke (25) und die zweite Sperrplatte (22b) verläuft.

4. Wasserverteiler (1) gemäß Anspruch 1, **dadurch gekennzeichnet, dass** das Wasserverteilungsventil (20) ferner einen Ventilboden (28) beinhaltet, der mit einem Ende der Ventilwelle (21) verbunden ist, wobei eine erste Begrenzungsformation (281) an einer Seite des Ventilbodens (28) bereitgestellt ist, die dem Boden (11) des Wasserverteilerkörpers (10) zugewandt ist, wobei eine zweite Begrenzungsformation (111) an dem Boden (11) des Wasserverteilerkörpers (10) angeordnet ist und wobei die erste Begrenzungsformation (281) und die zweite Begrenzungsformation (111) konfiguriert sind, um zusammenwirkend die Drehung des Wasserverteilungsventils (20) einzuschränken.

5. Wasserverteiler (1) gemäß einem der Ansprüche 1-4, **dadurch gekennzeichnet, dass** die drehbare Welle (30) einen drehbaren Wellenkörper (31), der außerhalb der Ventilwelle (21) liegt, und ein Dichtungselement (321), das an einer Seite des drehbaren Wellenkörpers (31) bereitgestellt ist, die der Basis (11) des Wasserverteilerkörpers (10) zugewandt ist, beinhaltet, wobei das Dichtungselement (321) so konfiguriert ist, dass es in der Lage ist, sich zwischen einer Vielzahl von Wasserdurchlauflochpositionen zu bewegen und ein Wasserdurchlaufloch (24a, 24b) abzudichten, wenn der drehbare Wellenkörper (31) gedreht wird.

6. Wasserverteiler (1) gemäß Anspruch 5, **dadurch gekennzeichnet, dass** eine Befestigungsnut (311) an der Seite des drehbaren Wellenkörpers (31), die der Basis (11) des Wasserverteilerkörpers (10) zugewandt ist, bereitgestellt ist, wobei das Dichtungselement (321) in der Befestigungsnut (311) angeordnet ist und wobei ein erstes elastisches Element (322) zwischen dem Dichtungselement (321) und der Befestigungsnut (311) bereitgestellt ist.

7. Wasserverteiler (1) gemäß Anspruch 5, **dadurch gekennzeichnet, dass** der Wasserverteiler (1) ferner einen Kugelverriegelungsmechanismus (34) beinhaltet, der an der Seite des drehbaren Wellenkörpers (31) bereitgestellt ist, die dem Boden (11) des Wasserverteilerkörpers (10) zugewandt ist, wobei der drehbare Wellenkörper (31) mit einer Montagenut (312) bereitgestellt ist, wobei der Kugelverriegelungsmechanismus (34) eine Kugelverriegelung (341) und ein zweites elastisches Element (342) beinhaltet, wobei die Kugelverriegelung (341) in der Montagenut (312) untergebracht ist, das zweite elastische Element (342) zwischen der Kugelverriegelung (341) und der Montagenut (312) anliegt und wobei ein mit der Kugelverriegelung (341) zusammenpassender Positionierungsabschnitt (221) auf der Sperrplatte bereitgestellt ist, die sich auf der Seite des Wasserverteilungsventils (20) nahe der Kugelverriegelung (341) befindet.

8. Wasserverteiler (1) gemäß Anspruch 5, **dadurch gekennzeichnet, dass** das Wasserverteilungsventil (20) ein erstes Durchgangsloch (29) beinhaltet, das durch die Ventilwelle (21) in einer axialen Richtung verläuft, die drehbare Welle (30) ein zweites Durchgangsloch (35) beinhaltet, das durch den drehbaren Wellenkörper (31) in der axialen Richtung verläuft, und der Wasserverteilerkörper (10) ein drittes Durchgangsloch (112) beinhaltet, das durch den Wasserverteilerkörper (10) in der axialen Richtung verläuft, wobei das erste Durchgangsloch (29), das zweite Durchgangsloch (35) und das dritte Durchgangsloch (112) so konfiguriert sind, dass ein Befestigungselement (60) durch sie hindurchgeführt werden kann, um den Wasserverteiler (1) an einer Wand zu befestigen.

## Revendications

1. Un distributeur d'eau (1) comprenant :
un corps de distributeur d'eau (10) comprenant une base (11) et une paroi latérale (12) qui créent une enceinte afin de former une chambre réceptrice, un tuyau d'entrée d'eau (13) et au moins deux tuyaux de sortie d'eau (14) étant agencés sur la paroi latérale (12) ;
une valve de distribution d'eau (20) ;
un arbre rotatif (30) qui est emmanché à l'extérieur de la valve de distribution d'eau (20) ; et
un presse-étoupe (40),
dans lequel la valve de distribution d'eau (20) et l'arbre rotatif (30) sont contraints dans la chambre réceptrice au moyen du presse-étoupe (40),
dans lequel une chambre d'étanchéité est formée entre l'arbre rotatif (30), la valve de distribution d'eau (20) et le corps de distributeur d'eau (10) et est divisée en une pluralité de cavités annulaires (23) par la valve de distribution d'eau (20),
dans lequel la cavité mise en communication avec le tuyau d'entrée d'eau (13) est configurée comme une cavité d'entrée d'eau (23a), et les cavités mises en communication avec les tuyaux de sortie d'eau (14) sont configurées comme des cavités de sortie d'eau (23b, 23c), et
dans lequel l'arbre rotatif (30) est configuré de telle sorte qu'une cavité de sortie d'eau (23b, 23c) peut être sélectionnée pour communiquer avec la cavité d'entrée d'eau (23a) lorsque l'arbre rotatif (30) est amené à effectuer une rotation ;
la valve de distribution d'eau (20) comprend un arbre de valve (21) et une pluralité de feuillets barrières (22) agencés dans une direction circonférentielle de l'arbre de valve (21), et la pluralité de feuillets barrières (22) divisent la chambre d'étanchéité en ladite pluralité de cavités annulaires (23) ;
la pluralité de cavités de sortie d'eau (23b, 23c) sont chacune mises en communication avec la cavité d'entrée d'eau (23a) à travers des trous de passage d'eau (24a, 24b) agencés sur les feuillets barrières (22).

2. Le distributeur d'eau (1) selon la revendication 1, **caractérisé en ce que** la pluralité de feuillets barrières (22) comprennent un premier feuillet barrière (22a) et un deuxième feuillet barrière (22b), dans lequel une première cavité (23a) est formée entre le premier feuillet barrière (22a) et l'arbre rotatif (30), une deuxième cavité (23b) est formée entre le premier feuillet barrière (22a) et le deuxième feuillet barrière (22b), et une troisième cavité (23c) est formée entre le deuxième feuillet barrière (22b) et la base (11) du corps de distributeur d'eau (10), dans lequel la première cavité (23a) est mise en communication avec le tuyau d'entrée d'eau (13), et la deuxième cavité (23b) et la troisième cavité (23c) sont chacune mises en communication avec un des tuyaux de sortie d'eau (14), et dans lequel le premier feuillet barrière (22a) est pourvu d'un premier trou de passage d'eau (24a) pour faire communiquer la première cavité (23a) avec la deuxième cavité (23b) et d'un deuxième trou de passage d'eau (24b) pour faire communiquer la première cavité (23a) avec la troisième cavité (23c).

3. Le distributeur d'eau (1) selon la revendication 2, **caractérisé en ce qu'**un pont (25) est fourni entre le premier feuillet barrière (22a) et le deuxième feuillet barrière (22b), et le deuxième trou de passage d'eau (24b) s'étend à travers le pont (25) et le deuxième feuillet barrière (22b).

4. Le distributeur d'eau (1) selon la revendication 1, **caractérisé en ce que** la valve de distribution d'eau (20) comprend en outre une base de valve (28) raccordée à une extrémité de l'arbre de valve (21), dans lequel une première formation restrictive (281) est fournie au niveau d'un côté de la base de valve (28) faisant face à la base (11) du corps de distributeur d'eau (10), dans lequel une deuxième formation restrictive (111) est agencée au niveau de la base (11) du corps de distributeur d'eau (10), et dans lequel la première formation restrictive (281) et la deuxième formation restrictive (111) sont configurées pour contraindre en coopération la rotation de la valve de distribution d'eau (20).

5. Le distributeur d'eau (1) selon n'importe laquelle des revendications 1 à 4, **caractérisé en ce que** l'arbre rotatif (30) comprend un corps d'arbre rotatif (31) emmanché à l'extérieur de l'arbre de valve (21) et un élément d'étanchéité (321) fourni au niveau d'un côté du corps d'arbre rotatif (31) faisant face à la base (11) du corps de distributeur d'eau (10), dans lequel l'élément d'étanchéité (321) est configuré pour être apte à se déplacer entre une pluralité de positions de trou de passage d'eau et fermer de façon étanche un trou de passage d'eau (24a, 24b) lorsque le corps d'arbre rotatif (31) est amené à effectuer une rotation.

6. Le distributeur d'eau (1) selon la revendication 5, **caractérisé en ce qu'**une rainure de fixation (311) est fournie au niveau du côté du corps d'arbre rotatif (31) faisant face à la base (11) du corps de distributeur d'eau (10), dans lequel l'élément d'étanchéité (321) est agencé dans la rainure de fixation (311), et dans lequel un premier élément élastique (322) est fourni entre l'élément d'étanchéité (321) et la rainure de fixation (311).

7. Le distributeur d'eau (1) selon la revendication 5, **caractérisé en ce que** le distributeur d'eau (1) comprend en outre un mécanisme de verrou à bille (34) fourni au niveau du côté du corps d'arbre rotatif (31) faisant face à la base (11) du corps de distributeur d'eau (10), dans lequel le corps d'arbre rotatif (31) est pourvu d'une rainure de montage (312), dans lequel le mécanisme de verrou à bille (34) comprend un verrou à bille (341) et un deuxième élément élastique (342), dans lequel le verrou à bille (341) est logé dans la rainure de montage (312), le deuxième élément élastique (342) est mis en aboutement entre le verrou à bille (341) et la rainure de montage (312), et dans lequel une portion de positionnement (221) appariée au verrou à bille (341) est fournie sur le feuillet barrière qui est placé sur le côté de la valve de distribution d'eau (20) proche du verrou à bille (341).

8. Le distributeur d'eau (1) selon la revendication 5, **caractérisé en ce que** la valve de distribution d'eau (20) comprend un premier trou traversant (29) s'étendant à travers l'arbre de valve (21) dans une direction axiale, l'arbre rotatif (30) comprend un deuxième trou traversant (35) s'étendant à travers le corps d'arbre rotatif (31) dans la direction axiale, et le corps de distributeur d'eau (10) comprend un troisième trou traversant (112) s'étendant à travers le corps de distributeur d'eau (10) dans la direction axiale, dans lequel le premier trou traversant (29), le deuxième trou traversant (35) et le troisième trou traversant (112) sont configurés pour qu'un élément de fixation (60) passe à travers de manière à fixer le distributeur d'eau (1) sur un mur.
